# EUROPÄISCHE PATENTSCHRIFT

(11) **EP 1 352 794 B1**
(45) Veröffentlichungstag und Bekanntmachung des Hinweises auf die Patenterteilung: **28.06.2006**
(21) Anmeldenummer: 03007511.3
(22) Anmeldetag: 01.04.2003
(51) Int. Cl.: B60R 21/34

(54) **Energiespeicher zum Anheben einer Fahrzeugklappe**
Energy storage device for raising a vehicle bonnet
Dispositif de stockage d'énergie pour lever le capot d'un véhicule

(30) Priorität: 11.04.2002 DE 10216054
(43) Veröffentlichungstag der Anmeldung: 15.10.2003
(73) Patentinhaber: Bayerische Motoren Werke Aktiengesellschaft, 80809 München (DE)
(72) Erfinder: Köstler, Ulrich, 85241 Hebertshausen (DE); Theil, Christoph, 80637 München (DE); Tietel, Andreas, 81375 München (DE); von Schuttenbach, Andreas, 85051 Ingolstadt (DE)

(56) Entgegenhaltungen:
- WO-A-00/69703
- DE-A- 3 630 549
- DE-A- 19 721 565
- DE-U- 20 105 884

## Beschreibung

Die Erfindung betrifft einen Energiespeicher zum Anheben einer Fahrzeugklappe zum Schutz eines aufprallenden Fußgängers gemäß des Oberbegriffs des Patentanspruchs 1.

Bei einem Unfall eines Motorradfahrers, Radfahrers oder Fußgängers mit einem Kraftfahrzeug sind die Personenschäden häufig besonders gravierend, weil die Motoraggregate bis sehr nahe an die Innenkontur der Motorhaube reichen. Eine an sich mögliche Aufpralldämpfung für den am Unfall beteiligten Motorradfahrer, Radfahrer oder Fußgänger bei dessen Aufprall auf die Motorhaube ist unter diesen Umständen nicht gegeben. Das Unfallopfer trifft nach einer nur geringen Verformung der Motorhaube auf die extrem unflexiblen Motoraggregate. Dies führt dann zu erheblichen Verletzungen des Unfallopfers. Eine größere Distanz zwischen Motorhaube und Motor ist daher wünschenswert, schafft jedoch andererseits unnötigen Hohlraum bzw. Totraum.

Um die Motorhaube im Bedarfsfall bei einem Unfall kurzfristig um ein bestimmtes Maß anheben zu können, ist ein Energiespeicher, wie beispielsweise ein Federspeicher oder ein Gasgenerator, erforderlich.

Aus der DE 197 21 565 A1 ist ein Energiespeicher zum Anheben einer Frontklappe eines Kraftfahrzeugs bekannt, der aus einer Kolben-Zylinder-Vorrichtung besteht. Der Kolben ist im Zylinder durch eine Kolbenfeder im eingeschobenen Zustand gehalten. Über dem Kolbenboden ist eine Treibladung angebracht, durch die nach der Zündung der Kolben und der Zylinder relativ zueinander verschiebbar sind, wobei der Kolben aus dem Zylinder ausschiebbar ist. Der Kolben muss dabei entgegen der Kraft der Kolbenfeder ausfahren. Zusätzlich ist außen um den Zylinder herum eine Spiralfeder angeordnet, die bei geschlossener Frontklappe vorgespannt ist. Die Spiralfeder unterstützt das Anheben der Frontklappe im Falle einer Kollision des Kraftfahrzeugs mit einem Fußgänger.

Ferner ist aus der DE 201 05 884 U1 eine Motorhaube eines Kraftfahrzeugs mit einer Sicherheitseinrichtung zur Erhöhung der passiven Sicherheit bekannt. Die Sicherheitseinrichtung weist in einem Hohlkörper einen mit einer Schubstange verbundenen und unter Einwirkung einer Druckfeder im vorgegebenen Umfang axial verstellbaren Kolben auf. Ferner besteht die Sicherheitseinrichtung aus einer elektromagnetisch betätigbaren Auslösevorrichtung, die zwei paarweise angeordnete Wälzelemente mit einer zwischen ihnen liegenden Auslösezunge aufweist, die im Verriegelungszustand in eine Rastnut der Schubstange eingreifen. Die Auslösezunge ist über einen Anker einer elektrischen Spule derart gegen die Kraft einer Andruckfeder axial bewegbar, dass mit Hilfe der Auslösezunge die Wälzelemente leichtgängig und schlupffrei aus der Rastnut herausbewegbar sind.

Der Erfindung liegt die Aufgabe zugrunde, die bekannten Energiespeicher zum Anheben einer Fahrzeugklappe zum Schutz eines aufprallenden Fußgängers, Motorrad- oder Radfahrers durch Federkraft zu verbessern.

Diese Aufgabe wird durch die Merkmale des Patentanspruchs 1 gelöst.

Kerngedanke der Erfindung ist es, dass der Energiespeicher zumindest eine erste und eine zweite Schraubenfeder aufweist, die in Reihe geschaltet sind und zwischen denen ein Zwischenstück angeordnet ist, sodass die beiden Schraubenfedern sich axial überlappen. Bevor die Fahrzeugklappe durch zumindest einen Energiespeicher angehoben wird, sind die beiden Schraubenfedern vorgespannt und werden in dieser Position durch einen Auslösemechanismus gehalten. Wenn nun ein Aufprall eines Fußgängers, Motorrad- oder Radfahrers detektiert wird, wird der Auslösemechanismus angesprochen, der daraufhin die vorgespannten Schraubenfedern freigibt. Durch die damit verbundene axiale Längung der Schraubenfedern wird die Fahrzeugklappe angehoben, sodass sie den eigentlichen Aufprall des Fußgängers, Motorrad- oder Radfahrers dämpfen kann.

Gegenüber den bekannten Energiespeichern hat der erfindungsgemäße Energiespeicher mit Federkraft den großen Vorteil, dass er im Motorraum deutlich weniger Bauraum vor allem in vertikaler Richtung benötigt. Denn die benötigte Blocklänge zweier vorgespannter Schraubenfedern, die so angeordnet sind, dass sie sich axial teilweise nebeneinander überlappen, ist deutlich geringer, als die Blocklänge einer einzigen Schraubenfeder. Dies stellt gerade angesichts des sehr knapp bemessenen Bauraums im Motorraum einen erheblichen Vorteil dar, da die erfindungsgemäßen Energiespeicher praktisch kaum in den eigentlichen Motorraum hineinragen.

Idealerweise weisen die erste und die zweite Schraubenfeder unterschiedliche Federkennlinien auf. Dies ermöglicht es, die Federkennlinie des Gesamtsystems bewusst in zwei unterschiedliche Abschnitte zu unterteilen. So kann die angehobene Fahrzeugklappe beispielsweise anfangs relativ nachgiebig unter dem Aufprall einfedern, während nach einem bestimmten Einfederweg der weitere Aufprall deutlich härter abgefedert wird. Dadurch ist es möglich, unterschiedlich große aufprallende Massen, wie beispielsweise die Masse eines Kindes oder eines ausgewachsenen schweren Mannes, jeweils trotzdem auf ein verträgliches Maß zu verzögern. Die Kennlinie einer Schraubenfeder muss dabei nicht unbedingt linear sein, sondern sie kann auch progressiv sein. Dazu kann die Schraubenfeder beispielsweise als Tonnen- oder Kegelfeder ausgeführt sein.

Vorteilhafterweise sind die erste und die zweite Schraubenfeder mit dem Zwischenstück zwischen zwei Befestigungsabschnitten angebracht, mit denen der Energiespeicher an der Fahrzeugklappe bzw. an einem Klappenscharnier und an einer Fahrzeugkarosserie befestigt ist. Dadurch kann der Energiespeicher als eine Einheit vormontiert und erst dann am Fahrzeug verbaut werden. Günstigerweise sind die beiden Befestigungsabschnitte so gestaltet, dass sie vor dem Anheben der Fahrzeugklappe die erste und die zweite Schraubenfeder und das Zwischenstück schützend umgeben. Die beiden Befestigungsabschnitte bilden also quasi eine Art Dose, die das Innenleben vor Schmutz und Dreckwasser schützt. Wenn die beiden Befestigungsabschnitte entsprechend dicht aneinander anliegen, ist sogar ein Verbau vor der Lackierung des Fahrzeugs möglich, da der Lack nicht in die Dose eindringen kann. Eine Montage vor der Lackierung hat den Vorteil, dass es bei der Montage des Energiespeichers zu keiner Beschädigung des Lacks kommen kann. Die Befestigungsabschnitte können beispielsweise leichte und kostengünstig herstellbare Kunststoffteile sein.

Idealerweise ist zumindest ein Führungsstift vorgesehen, über den die beiden Befestigungsabschnitte zueinander geführt sind. Der Führungsstift dient vor allem während des Auslösens des Energiespeichers zur Führung der Befestigungsabschnitte zueinander. Der Führungsstift kann an einem Befestigungsabschnitt, am Zwischenstück oder an der Fahrzeugklappe bzw. dem Klappenscharnier oder an der Fahrzeugkarosserie befestigt sein. Er kann auch mit einem dieser Bauteile einteilig ausgeführt sein. Günstigerweise ist der Führungsstift nicht am Energiespeicher befestigt, da die Fahrzeugklappe oder -karosserie eine höhere Steifigkeit aufweisen, als der Energiespeicher.

Der Führungsstift kann des weiteren zugleich zur Hubbegrenzung beim Anheben der Fahrzeugklappe dienen. Dadurch können nach dem Auslösen des Energiespeichers die Schraubenfedern die beiden Befestigungsabschnitte nur bis zu einem vorgegebenen maximalen Maß auseinander drücken. Die Hubbegrenzung stellt ein koordiniertes Anheben der Fahrzeugklappe sicher.

Vorteilhafterweise weist das Zwischenstück in den Bereichen, an denen sich die Endabschnitte der Schraubenfedern abstützen, jeweils eine napfartige Vertiefung auf, sodass die Schraubenfedern radial gehalten sind. So kann gewährleistet werden, dass die Schraubenfedern auch nach der Auslösung des Energiespeichers in einer definierten Position verbleiben.

Da die Härte einer einzelnen Schraubenfeder unter Umständen nicht ausreichend ist bzw. um zu vermeiden, dass eine Schraubenfeder mit sehr großem Außendurchmesser gewählt werden muss, bestehen die erste und die zweite Schraubenfeder idealerweise jeweils aus einer Gruppe parallel geschalteter Schraubenfedern. Dadurch kann die erforderliche Federhärte durch mehrere kleine Schraubenfedern realisiert werden. Ferner können auch rechts und links gewickelte Schraubenfedern parallel geschaltet werden, um einen Einfluss der Wickelrichtung zu vermeiden. Die parallel geschalteten Schraubenfedern können bei Bedarf auch ineinander angeordnet werden.

Weitere vorteilhafte Ausgestaltungen sind Gegenstand von Unteransprüchen.

Die Erfindung wird nachstehend unter Bezugnahme auf die anliegende Figur näher erläutert. Sie zeigt in schematischer Darstellungsweise eine perspektivische Ansicht eines erfindungsgemäßen Energiespeichers in einer Zusammenbaudarstellung.

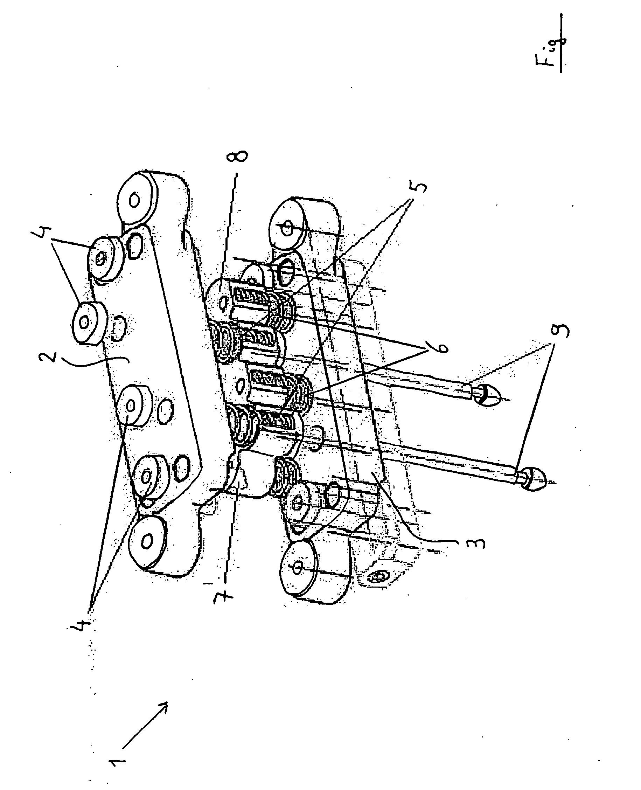

In der Figur ist ein Energiespeicher 1 gezeigt. Der Energiespeicher 1 ist mit einem oberen Befestigungsabschnitt 2 an einem hier nicht dargestellten Scharnier einer Motorhaube angebunden, und mit einem unteren Befestigungsabschnitt 3 an einer hier ebenfalls nicht dargestellten Fahrzeugkarosserie. Beim Anbinden können zum Ausgleich von Toleranzen zwischen dem oberen Befestigungsabschnitt 2 und dem Scharnier Unterlegscheiben 4 zwischengelegt werden. Denkbar ist aber auch der Einsatz anderer Höhenausgleichselemente, wie sie aus dem Fahrzeugbau bereits bekannt sind.

Zwischen dem oberen und dem unteren Befestigungsabschnitt 2 und 3 befinden sich zwei Federpakete 5 und 6 aus jeweils vier parallel geschalteten Schraubendruckfedem. Die beiden Federpakete 5 und 6 sind zueinander in Reihe geschaltet. Zwischen den beiden Federpaketen 5 und 6 befindet sich ein Zwischenstück 7. Das Zwischenstück 7 weist für jede Schraubenfeder der Federpakete 5 und 6 einen Napf 8 auf, in dem die jeweilige Schraubenfeder radial gehalten ist. Die Näpfe 8 sind in dem Zwischenstück 7 jeweils so angeordnet, dass die Schraubenfedern der beiden Federpakete 5 und 6 sich axial im Bereich des Zwischenstücks 7 nebeneinander überlappen. Der obere und untere Befestigungsabschnitt 2 und 3 und das Zwischenstück 7 sind zueinander geführt durch zwei Führungsstifte 9, über die jeweils auch eine Schraubenfeder geführt ist.

Bevor ein Aufprall eines Fußgängers, Motorrad- oder Radfahrers auf das Fahrzeug detektiert wird, sind die beiden Federpakete 5 und 6 soweit zusammengepresst, dass die Befestigungsabschnitte 2 und 3 mit ihrem seitlichen Rand aneinander anliegen. Der Energiespeicher 1 wird durch einen hier nicht dargestellten Auslösmechanismus in dieser Position gehalten. Erst wenn ein Aufprall eines Fußgängers, Motorrad- oder Radfahrers detektiert wird, gibt der Auslösemechanismus den Energiespeicher 1 frei. Dann längen sich die zusammengepressten Schraubenfedern schlagartig, und drücken dabei das am oberen Befestigungsabschnitt 2 angebrachte Scharnier und damit die Motorhaube blitzartig nach oben. Aufgrund der Führungsstifte 9 erfolgt die Freisetzung der Energie der vorgespannten Schraubenfedern zielgerichtet nur in Richtung der Führungsstifte 9.

Dies ist eine einfache und damit auch kostengünstige Möglichkeit einen Energiespeicher 1 aufzubauen. Der große Vorteil gegenüber den bereits aus dem Stand der Technik bekannten Energiespeichern besteht darin, dass der erfindungsgemäße Energiespeicher 1 trotz des großen Federweges sehr flach ist, und damit wenig Bauraum im Motorraum benötigt.

## Patentansprüche

1. Energiespeicher zum Anheben einer Fahrzeugklappe durch Federkraft zum Schutz eines aufprallenden Fußgängers **dadurch gekennzeichnet, dass** der Energiespeicher (1) zumindest eine erste und eine zweite Schraubenfeder (5 und 6) aufweist, die vor dem Anheben der Fahrzeugklappe vorgespannt sind, und die in Reihe geschaltet sind und zwischen denen ein Zwischenstück (7) angeordnet ist, sodass die beiden Schraubenfedern (5 und 6) sich axial überlappen.

2. Energiespeicher nach Anspruch 1, **dadurch gekennzeichnet, dass** die erste und die zweite Schraubenfeder (5 und 6) unterschiedliche Federkennlinien aufweisen.

3. Energiespeicher nach Anspruch 1 oder 2, **dadurch gekennzeichnet, dass** die erste und die zweite Schraubenfeder (5 und 6) mit dem Zwischenstück (7) zwischen zwei Befestigungsabschnitten (2 und 3) angebracht sind, mit denen der Energiespeicher (1) an der Fahrzeugklappe bzw. einem Klappenscharnier und an einer Fahrzeugkarosserie befestigt ist.

4. Energiespeicher nach Anspruch 3, **dadurch gekennzeichnet, dass** die beiden Befestigungsabschnitte (2 und 3) so gestaltet sind, dass sie vor dem Anheben der Fahrzeugklappe die erste und die zweite Schraubenfeder (5 und 6) und das Zwischenstück (7) schützend umgeben.

5. Energiespeicher nach Anspruch 3 oder 4, **dadurch gekennzeichnet, dass** zumindest ein Führungsstift (9) vorgesehen ist, über den die beiden Befestigungsabschnitte (2 und 3) zueinander geführt sind.

6. Energiespeicher nach Anspruch 5, **dadurch gekennzeichnet, dass** der Führungsstift (9) zugleich zur Hubbegrenzung beim Anheben der Fahrzeugklappe dient.

7. Energiespeicher nach einem der vorhergehenden Ansprüche, **dadurch gekennzeichnet, dass** das Zwischenstück (7) in den Bereichen, an denen sich die Endabschnitte der Schraubenfedern (5 und 6) abstützen, jeweils eine napfartige Vertiefung (8) aufweist, sodass die Schraubenfedern (5 und 6) radial gehalten sind.

8. Energiespeicher nach einem der vorhergehenden. Ansprüche, **dadurch gekennzeichnet, dass** die Schraubenfedern (5 und 6) Druckfedern sind.

9. Energiespeicher nach einem der vorhergehenden Ansprüche, **dadurch gekennzeichnet, dass** die erste und die zweite Schraubenfeder (**5** und **6**) jeweils aus einer Gruppe parallel geschalteter Schraubenfedern (5 und 6) besteht.

10. Energiespeicher nach Anspruch 9, **dadurch gekennzeichnet, dass** zumindest zwei der parallel geschalteten Schraubenfedern (5 und 6) ineinander angeordnet sind.

11. Energiespeicher nach Anspruch 9 oder 10, **dadurch gekennzeichnet, dass** jede Gruppe aus vier Schraubenfedern besteht.

## Claims

1. An energy accumulator for lifting a flap, tailgate or the like of a vehicle by spring force for protecting a colliding pedestrian, **characterised in that** the energy accumulator (1) comprises at least a first and a second helical spring (5 and 6) which are prestressed before the flap is raised and are connected in series and between which an intermediate member (7) is disposed, so that the two helical springs (5 and 6) axially overlap.

2. An energy accumulator according to claim 1, **characterised in that** the first and the second helical spring (5 and 6) have different spring characteristics.

3. An energy accumulator according to claim 1 or claim 2, **characterised in that** the first and the second helical spring (5 and 6) and the intermediate member (7) are disposed between two fastening portions (2 and 3) by means of which the energy accumulator (1) is fastened to the flap or flap hinge and to a vehicle body.

4. An energy accumulator according to claim 3, **characterised in that** the two fastening portions (2 and 3) are shaped so that before the flap is raised they protect and surround the first and the second helical spring (5 and 6) and the intermediate member (7).

5. An energy accumulator according to claim 3 or claim 4, **characterised in that** at least one guide pin (9) is provided for guiding the two fastening portions (2 and 3) relative to one another.

6. An energy accumulator according to claim 5, **characterised in that** the guide pin (9) also limits the stroke when the flap is raised.

7. An energy accumulator according to any of the preceding claims, **characterised in that** the intermediate member (7) has a bowl-like recess (8) at the places where the end portions of the helical springs (5 and 6) abut, so that the helical springs (5 and 6) are held radially.

8. An energy accumulator according to any of the preceding claims, **characterised in that** the helical springs (5 and 6) are compression springs.

9. An energy accumulator according to any of the preceding claims, **characterised in that** the first and the second helical spring (5 and 6) each comprise a group of helical springs (5 and 6) connected in parallel.

10. An energy accumulator according to claim 9, **characterised in that** at least two of the parallel connected helical springs (5 and 6) are disposed inside one another.

11. An energy accumulator according to claim 9 or claim 10, **characterised in that** each group comprises four helical springs.

## Revendications

1. Accumulateur d'énergie pour soulever un capot de véhicule au moyen d'une tension de ressort afin de protéger un piéton entrant en collision avec le véhicule,
**caractérisé en ce que**
l'accumulateur d'énergie (1) comporte au moins un premier et un second ressort à boudin (5 et 6) précontraints avant le soulèvement du capot du véhicule et montés en série, une pièce intercalaire (7) étant disposée entre eux de telle sorte que les deux ressorts à boudin (5 et 6) se chevauchent axialement.

2. Accumulateur d'énergie selon la revendication 1,
**caractérisé en ce que**
le premier et le second ressort à boudin (5 et 6) présentent des courbes caractéristiques différentes.

3. Accumulateur d'énergie selon la revendication 1 ou 2,
**caractérisé en ce que**
le premier et le second ressort à boudin (5 et 6) sont mis en place, avec la pièce intercalaire (7), entre deux sections de fixation (2 et 3) à l'aide desquelles l'accumulateur d'énergie (1) est fixé sur le capot du véhicule ou sur une charnière du capot et sur la carrosserie.

4. Accumulateur d'énergie selon la revendication 3,
**caractérisé en ce que**
les deux sections de fixation (2 et 3) sont configurées de telle manière qu'avant le soulèvement du capot, elles entourent, de façon à les protéger, le premier et le second ressort à boudin (5 et 6) et la pièce intercalaire (7).

5. Accumulateur d'énergie selon la revendication 3 ou 4,
**caractérisé en ce qu'**
au moins une goupille de guidage (9) guide les deux sections de fixation (2 et 3) l'une vers l'autre.

6. Accumulateur d'énergie selon la revendication 5,
**caractérisé en ce que**
la goupille de guidage (9) sert en même temps à la limitation de course lors du soulèvement du capot.

7. Accumulateur d'énergie selon l'une des revendications précédentes,
**caractérisé en ce que**
la pièce intercalaire (7) présente à chaque fois, dans les zones sur lesquelles s'appuient les sections terminales des ressorts à boudin (5 et 6), un creux en forme de godet (8), de sorte que les ressorts à boudin (5 et 6) sont maintenus en place radialement.

8. Accumulateur d'énergie selon l'une des revendications précédentes,
**caractérisé en ce que**
les ressorts à boudin (5 et 6) sont des ressorts de pression.

9. Accumulateur d'énergie selon l'une des revendications précédentes,
**caractérisé en ce que**
le premier et le second ressort à boudin (5 et 6) sont constitués chacun d'un groupe de ressorts à boudin (5 et 6) montés en parallèle.

10. Accumulateur d'énergie selon la revendication 9,
**caractérisé en ce qu'**
au moins deux des ressorts à boudin (5 et 6) montés en parallèle sont disposés l'un à l'intérieur de l'autre.

11. Accumulateur d'énergie selon la revendication 9 ou 10,
**caractérisé en ce que**
chaque groupe est constitué de quatre ressorts à boudin.
